(19) Europäisches Patentamt
European Patent Office
Office européen des brevets

(11) **EP 3 145 746 B1**

(12) **EUROPÄISCHE PATENTSCHRIFT**

(45) Veröffentlichungstag und Bekanntmachung des Hinweises auf die Patenterteilung:
**02.08.2023 Patentblatt 2023/31**

(21) Anmeldenummer: **14725198.7**

(22) Anmeldetag: **21.05.2014**

(51) Internationale Patentklassifikation (IPC):
**B60L 7/24** (2006.01)    **B60T 8/00** (2006.01)
**H02P 21/00** (2016.01)

(52) Gemeinsame Patentklassifikation (CPC):
**B60T 8/326; B60L 7/24; B60T 8/4081;**
**H02P 21/0089;** Y02T 10/64

(86) Internationale Anmeldenummer:
**PCT/EP2014/060438**

(87) Internationale Veröffentlichungsnummer:
**WO 2015/176756 (26.11.2015 Gazette 2015/47)**

(54) **VERFAHREN ZUR ANSTEUERUNG EINES BREMSSYSTEMS**

METHOD FOR CONTROL OF BRAKING SYSTEM

PROCÉDÉ DE COMMANDE D'UN SYSTÈME DE FREINAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**29.03.2017 Patentblatt 2017/13**

(73) Patentinhaber: **Continental Automotive Technologies GmbH**
**30165 Hannover (DE)**

(72) Erfinder:
• **KAUFMANN, Tom**
**55566 Ippenschied (DE)**
• **STAUDER, Peter**
**55128 Mainz (DE)**

(74) Vertreter: **Continental Corporation**
**c/o Continental Teves AG & Co. OHG**
**Intellectual Property**
**Guerickestraße 7**
**60488 Frankfurt a. Main (DE)**

(56) Entgegenhaltungen:
**EP-A2- 0 638 457        EP-A2- 2 015 442**
**DE-A1-102010 040 097    US-A1- 2009 284 195**
**US-B1- 6 194 865**

**Beschreibung**

Die Erfindung betrifft ein Verfahren gemäß Oberbegriff von Anspruch 1, ein elektronisches Steuergerät gemäß Oberbegriff von Anspruch 13 sowie ein Bremssystem gemäß Oberbegriff von Anspruch 14.

Aus der EP 1 154 922 B1 sind ein Verfahren und ein System zur Ansteuerung einer Bremse eines Fahrzeugs bekannt, die mittels eines Aktuators elektromechanisch betätigbar ist, der aus einem Elektromotor sowie einem dem Elektromotor nachgeschalteten Getriebe besteht, wobei der Elektromotor eine konstruktionsbedingte Drehzahl-Drehmoment-Kennlinie aufweist, wobei entsprechend der gewünschten Betätigungskraft sowie dem Betätigungskraftgradienten die Steigung der Drehzahl-Drehmoment-Kennlinie des Elektromotors durch Schwächen von Komponenten des elektromagnetischen Feldes des Elektromotors derart geändert wird, dass bei gleichem Drehmoment eine höhere Drehzahl erreicht wird. Bei der beschriebenen Bremse wird der Reibbelag elektromechanisch gegen die Bremsscheibe geführt.

Ein gattungsgemäßes hydraulisches Bremssystem ist in der DE 10 2010 040 097 A1 beschrieben. Als Druckquelle dient hierbei eine hydraulische Zylinder-Kolben-Anordnung, bei der ein Kolben von einem Elektromotor unter Zwischenschaltung eines Rotations-Translations-Getriebes angetrieben wird. Die Druckquelle ist über hydraulische Leitungen und eingefügte Hydraulikventile mit Radbremsen verbunden.

Elektronisch kommutierte permanenterregte Synchronmaschinen, auch als bürstenlose Motoren bekannt, weisen einen Stator mit mindestens zwei, insbesondere drei, Phasenwicklungen und einen Rotor mit mindestens einem senkrecht zur Drehachse angeordneten Polpaar auf, welches durch einen oder mehrere in oder auf dem Rotor angeordnete Permanentmagnete gebildet wird. Wenn eine oder mehrere Phasenwicklungen bestromt werden, so richtet sich der Rotor im entstehenden Magnetfeld aus. Für eine gezielte Ansteuerung muss die Rotorposition ermittelt werden, was beispielsweise mittels eines Resolvers oder Drehencoders erfolgt.

Die Regelung der Phasenströme erfolgt häufig in einem rotorfesten Koordinatensystem, wobei eine d-Achse in Richtung des Rotormagnetfelds und eine um 90° (elektrischer Winkel, über die Polpaarzahl mit dem mechanischen Winkel verknüpft) zu dieser stehenden q-Achse betrachtet werden. Ein in q-Achsen-Richtung fließender Strom bestimmt (in einem Motor ohne Reluktanzmoment) das abgegebene Drehmoment und wird daher als drehmomentbildender Strom ($i_q$) bezeichnet. Unterhalb einer Grenzdrehzahl wird für eine Maximierung des Wirkungsgrads der in d-Achsen-Richtung fließende feldschwächende Strom ($i_d$) bei null gehalten. Das rotorfeste Koordinatensystem rotiert gegenüber dem Stator, daher werden über eine geeignete Transformation anhand der Rotorposition die anzulegenden Phasenströme bzw. -spannungen ermittelt.

Bei zunehmender Drehzahl wird in den Phasenwicklungen eine immer größere Gegenspannung induziert, so dass die erreichbare Drehzahl durch die verfügbare Versorgungsspannung begrenzt ist. Es gibt also eine natürliche Spannungsgrenze für die Drehzahl, welche bei Bestromung der Phasenwicklungen ausschließlich mit einem drehmomentbildenden Strom bei voller Aussteuerung erreicht wird, d.h. ohne Verringerung der Spannung mittels einer Pulsweitenmodulation. Durch Anlegen eines geeigneten Stroms in Richtung der negativen d-Achse, also in einem Feldschwächungsbetrieb, können höhere Drehzahlen erreicht werden.

Aus der DE 102007033145 A1 ist eine Vorrichtung zum Betreiben einer Synchronmaschine mit einem Stator, dem drei Wicklungsstränge zugeordnet sind, und einem Rotor bekannt. Die Vorrichtung ist dazu ausgebildet, einen Sollwert eines magnetfeldbildenden Stroms in einem mit dem Rotor der Synchronmaschine umlaufenden Koordinatensystem abhängig von einer magnetfeldbildenden Rohsollstromkomponente des rotorumlaufenden Koordinatensystems und einer magnetfeldbildenden Stromgrenze des rotorumlaufenden Koordinatensystems zu ermitteln, und zwar derart, dass der Sollwert des magnetfeldbildenden Stroms auf die magnetfeldbildende Stromgrenze begrenzt wird, wobei die magnetfeldbildende Stromgrenze betragsmäßig unter einer für die Synchronmaschine im Feldschwächbetrieb typischen Kippgrenze liegt. Weiterhin ist sie dazu ausgebildet, eine drehmomentbildende Stromgrenze des rotorumlaufenden Koordinatensystems im Bereich der Begrenzung des magnetfeldbildenden Stroms abhängig von der magnetfeldbildenden Rohsollstromkomponente und der magnetfeldbildenden Stromgrenze betragsmäßig zu reduzieren.

Ein derartiger Feldschwächregler ermöglicht es, in allen Betriebspunkten des Motors eine Spannungsreserve zum Einprägen neuer Stromsollwerte vorzuhalten. Allerdings bewirkt das Vorhalten einer Spannungsreserve, dass im stationären Zustand immer ein größerer Feldschwächstrom id eingeprägt wird, als zum Erreichen des Arbeitspunktes notwendig ist. Dies erhöht die ohmschen Verluste des Motors und verschlechtert so den Wirkungsgrad des Antriebs. Nachteilig ist außerdem, dass der Feldschwächregler eine gewisse Zeit benötigt, um den notwendigen magnetfeldschwächenden Strom einzustellen, was bei dynamischen lagegeregelten Systemen zu einer Verlängerung der Stellzeit führt.

Beispielsweise in Automobilanwendungen werden Elektromotoren bis 1kW aus einer niedrigen Versorgungsspannung (z.B. 12V) betrieben, so dass der ohmsche Widerstand der Phasenwicklungen gegenüber dem induktiven Blindwiderstand nicht mehr vernachlässigt werden kann. Allgemein können bei hohen Drehzahlen des Rotors durch eine Wechselwirkung zwischen magnetfeldschwächendem und drehmomentbildendem Strom Instabilitäten in der Regelung bzw. Ansteuerung des Motors auftreten.

Aus der US 20091284195 A1 ist ein Verfahren bekannt, um eine Drehmomentlinearität in der Feldschwächungsregion eines Motors zu erzeugen. Für die Feldschwächung werden Querachsen- und Längsachsenkomponenten der Strombefehle des Stators herangezogen. Dabei wird ein Regelkreis eingesetzt.

US 6 194 865 81 zeigt eine Steuerung für einen Motor, um ein angefordertes Drehmoment exakter einstellen zu können. Unter anderem wird ein Feldschwächungsstrom verwendet, der gemäß den Drehmomenten und Drehzahlen der Maschine vorbestimmt ist.

Aufgabe der vorliegenden Erfindung ist es, ein Verfahren zur Ansteuerung eines Bremssystems anzugeben, welches eine von einer elektronisch kommutierten Synchronmaschine angetriebene Zylinder-Kolbenanordnung aufweist, wobei auch ein Druckaufbau mit hoher Dynamik zuverlässig durchführbar sein soll.

Diese Aufgabe wird durch ein Verfahren gemäß Anspruch 1 gelöst.

Es wird also ein Verfahren zum Betreiben eines Bremssystems für Kraftfahrzeuge mit einer elektrisch steuerbaren Druckbereitstellungseinrichtung bereitgestellt, welche eine Zylinder-Kolben-Anordnung mit einem hydraulischen Druckraum und einem durch einen elektromechanischen Aktuator verschiebbaren Kolben umfasst, mit einer Anzahl hydraulischer Radbremsen, welche mindestens einer Achse des Fahrzeugs zugeordnet sind und über den hydraulischen Druckraum mit Bremsdruck versorgt werden können, und mit einem Sensor zur Erfassung des Fahrerbremswunschs, wobei der elektromechanische Aktuator ein Rotations-Translations-Getriebe und eine elektrische Maschine aufweist. Erfindungsgemäß ist die elektrische Maschine als elektronisch kommutierten Synchronmaschine ausgeführt, welche einen Stator mit mindestens zwei, insbesondere drei, Phasenwicklungen, einen mindestens einen Permanentmagnet aufweisenden Rotor sowie mindestens einen Rotorlagesensor umfasst. Ein drehmomentbildender Strom (iq) und ein magnetfeldschwächender Strom (id) werden in einem rotorfesten Koordinatensystem geregelt, wobei als Stellgrößen Spannungen in dem rotorfesten Koordinatensystem ermittelt werden, welche anhand der gemessenen Rotorlage in einen Spannungszeiger transformiert werden, der für jede Phasenwicklung des Stators eine anzulegende Spannung angibt. Ein Sollwert für den magnetfeldschwächenden Strom (id) wird nach Maßgabe der gemessenen Drehzahl des Rotors auf einen Maximalwert begrenzt, welcher vorzugsweise aus einem vorgegebenen Kennfeld ermittelt wird. Es ist zweckmäßig, wenn unterhalb einer vorgegebenen Mindestdrehzahl der magnetfeldschwächende Strom auf null gesetzt bzw. geregelt wird.

Dadurch, dass der eingeprägte magnetfeldschwächende Strom (bzw. dessen Sollwert) begrenzt wird, können bei hohen Drehzahlen des Rotors auftretende Instabilitäten der Regelung vermieden werden. Eine gemessene Drehzahl lässt sich anhand der Informationen des oder der ohnehin erforderlichen Rotorlagesensoren bestimmen. Indem die Begrenzung des magnetfeldschwächenden Stroms nach Maßgabe der gemessenen Drehzahl erfolgt, wird ein instabiler Betrieb des Motors einfach und schnell vermieden. Somit ist eine zuverlässige Ansteuerung des bürstenlosen Elektromotors bei hohen Drehzahlen bzw. hoher Dynamik gewährleistet. Wird ein Kennfeld vorgegeben, so kann der Maximalwert für den magnetfeldschwächenden Strom einfach ausgelesen werden. Ein zuverlässiger und schneller Druckaufbau bei Bedarf ist gewährleistet.

Erfindungsgemäß wird der Sollwert für den magnetfeldschwächenden Strom weiterhin derart begrenzt, dass er einen nach Maßgabe der gemessenen Drehzahl vorgegebenen Minimalwert nicht unterschreitet. Dies beschleunigt ein Erreichen des Optimums durch den Feldschwächregler.

Erfindungsgemäß wird ein Sollwert für den magnetfeldschwächenden Strom nach Maßgabe der gemessenen Drehzahl des Rotors aus einem ersten vorgegebenen Kennfeld ermittelt. Dadurch, dass ein Sollwert für den magnetfeldschwächenden Strom anhand einer Kennlinie ermittelt wird, weist die Ansteuerung gemäß dieser Ausführungsform der Erfindung eine besonders einfache Struktur auf. Ein entsprechendes Verfahren kann daher auch mit Prozessoren geringer Rechenleistung ausgeführt werden. Ferner entfällt eine Verzögerung im Aufbringen des magnetfeldschwächenden Stroms durch den Feldschwächregler, womit also eine besonders hohe Stellgeschwindigkeit erreichbar ist.

Erfindungsgemäß wird der Sollwert für den magnetfeldschwächenden Strom anhand des Verhältnisses zwischen einer Referenzspannung und einer momentanen Versorgungsspannung angepasst oder skaliert. Die momentane Versorgungsspannung kann beispielsweise von einem externen Steuergerät empfangen werden oder als Zwischenkreisspannung in einer mit einer Phasenwicklung des Stators verbundenen Pulsweitenmodulationsschaltung gemessen werden. Dies ermöglicht es, auch bei Schwankungen in der Versorgungsspannung ein gleichbleibendes Verhalten des Motors beizubehalten.

Gemäß einer ganz besonders bevorzugten Ausführungsform der Erfindung wird ein Sollwert für den drehmomentbildenden Strom nach Maßgabe der gemessenen Drehzahl des Rotors auf einen Maximalwert des drehmomentbildenden Stroms begrenzt. Dies verringert den Rechenaufwand für die Durchführung des Verfahrens und ermöglicht eine flexible Anpassung des Motorverhaltens an die gewünschte Anwendung.

Insbesondere können der Sollwert für den magnetfeldschwächenden Strom und der Maximalwert des drehmomentbildenden Stroms derart vorgegeben werden, dass ein vorgegebener Grenzwert für einen Gesamtstrom aus magnetfeldschwächendem Strom und drehmomentbildendem Strom nicht überschritten wird und dass das Drehmoment der elektronisch kommutierten Synchronmaschine unter Einhaltung des Grenzwerts für den Gesamtstrom maximal wird. Dies kann sowohl im Generatorbetrieb als auch im Motorbetrieb der elektronisch kommutierten Synchronmaschine erfolgen. Dann ist der Eingangsgleichstrom bzw. Rückspeisestrom begrenzt, so dass eine übermäßige Erhitzung oder Beschädigung von Batterie und/oder Lade- bzw. Ansteuerelektronik vermieden wird.

Gemäß einer alternativen besonders bevorzugten Ausführungsform der Erfindung erfolgt die Begrenzung, nachdem der Sollwert für den magnetfeldschwächenden Strom (id) nach Maßgabe einer Differenz zwischen dem Betrag einer vorgegebenen Maximalspannung und dem Betrag eines aus drehmomentbildender Spannung und magnetfeldschwächender Spannung gebildeten Spannungszeigers ermittelt wurde, wobei insbesondere eine Regelung dieser Differenz erfolgt. Die vorgegebene Maximalspannung kann insbesondere einer momentanen Versorgungsspannung abzüglich eines vorgegebenen Spannungsintervalls entsprechen, vorzugsweise einer gemessenen Zwischenkreisspannung einer mit einer Phasenwicklung des Stators verbundenen Pulsweitenmodulationschaltung. Somit kann eine Feldschwächregelung unter Berücksichtigung der momentan verfügbaren Spannung erfolgen.

Gemäß einer ganz besonders bevorzugten Ausführungsform der Erfindung findet eine Regelung der Differenz zwischen dem Betrag einer vorgegebenen Maximalspannung und dem Betrag eines aus drehmomentbildender Spannung und magnetfeldschwächender Spannung gebildeten Spannungszeigers dann statt, wenn der Betrag des Spannungszeigers einen vorgegebenen Minimalwert unterschreitet. Hierbei ist es zweckmäßig, wenn eine Vorsteuerung des Sollwerts für den magnetfeldschwächenden Strom erfolgt, insbesondere indem der maximal zulässige feldschwächende Strom vorgegeben wird. Dies ermöglicht es, die erreichte Dynamik der Ansteuerung des Motors zu erhöhen. Besonders zweckmäßig ist es, wenn der Regler den magnetfeldschwächenden Strom auf den aktuell benötigten Wert reduziert. Somit werden unnötige Stromwärmeverluste vermieden.

Zweckmäßigerweise wird ein Sollwert für den drehmomentbildenden Strom (iq) nach Maßgabe einer Abweichung zwischen einer Solldrehzahl und der gemessenen Drehzahl des Rotors ermittelt, wobei der Sollwert für den drehmomentbildenden Stroms nach Maßgabe eines Sollwerts für den magnetfeldschwächenden Strom und/oder eines maximal zulässigen Gesamtstroms und/oder eines maximal zulässigen Motormoments auf einen Maximalwert begrenzt wird.

Es ist vorteilhaft, wenn die Regelung des drehmomentbildenden Stroms derart erfolgt, dass nach Maßgabe der Differenz zwischen einem Sollwert für den drehmomentbildenden Strom und einem gemessenen drehmomentbildenden Strom eine drehmomentbildende Spannung in dem rotorfesten Koordinatensystem ermittelt wird, wobei die drehmomentbildende Spannung vorzugsweise nach Maßgabe einer Differenz zwischen dem Betrag einer vorgegebenen Maximalspannung, insbesondere einer Versorgungsspannung, und dem Betrag einer magnetfeldschwächenden Spannung begrenzt wird.

Vorzugsweise erfolgt die Regelung des magnetfeldschwächenden Stroms derart, dass nach Maßgabe der Differenz zwischen einem Sollwert für den magnetfeldschwächenden Strom und einem gemessenen magnetfeldschwächenden Strom eine magnetfeldschwächende Spannung in dem rotorfesten Koordinatensystem ermittelt wird.

Bevorzugt werden ein gemessener drehmomentbildender Strom und ein gemessener magnetfeldschwächender Strom in einem rotorfesten Koordinatensystem anhand der gemessenen Rotorlage aus gemessenen Strömen durch die Phasenwicklungen des Rotors ermittelt.

Zweckmäßigerweise wird der Sollwert für den magnetfeldschwächenden Strom weiterhin anhand einer gemessenen Rotortemperatur und/oder gemessenen Statortemperatur und/oder einer momentanen Versorgungsspannung begrenzt oder angepasst. Die momentane Versorgungsspannung kann z.B. an einem vorgegebenen Schaltungspunkt gemessen werden.

Es ist vorteilhaft, wenn die Phasenwicklungen des Stators über jeweils eine Pulsweitenmodulationsschaltung mit Strom versorgt werden, wobei eine an eine Phasenwicklung des Stators anzulegende Spannung in einen Aussteuerungsgrad der entsprechenden Pulsweitenmodulationsschaltung umgerechnet wird. Der Aussteuerungsgrad einer Pulsweitenmodulation gibt das Verhältnis zwischen der Zeit, während der die maximale Spannung anliegt, und der Zeit, während der keine Spannung angelegt wird, in einer zyklisch wiederholten Periode an. Derartige Pulsweitenmodulationsschaltungen sind wegen ihres einfachen Aufbaus und einer hohen Effizienz weit verbreitet und preisgünstig.

Besonders vorteilhaft ist es, wenn der Aussteuerungsgrad gemäß einem Verhältnis aus einer Referenzspannung und einer momentanen Versorgungsspannung, insbesondere einer gemessenen Zwischenkreisspannung der Pulsweitenmodulationsschaltung, angepasst oder skaliert wird. Somit ist ein gleichbleibendes Verhalten der elektronisch kommutierten Synchronmaschine gewährleistet.

Die Erfindung betrifft weiterhin ein elektronisches Steuergerät für ein Bremssystem, umfassend eine Ansteuerschaltung für eine elektronisch kommutierte Synchronmaschine, mit einer Recheneinheit und in mindestens einer Brückenschaltung angeordneten Halbleiterschaltelementen, insbesondere jeweils einer Phase des Stators zugeordnete Pulsweitenmodulationsschaltungen, wobei die Recheneinheit ein erfindungsgemäßes Verfahren durchführt, wobei

der Maximalwert für den magnetfeldschwächenden Strom anhand von aus einem nichtflüchtigen Speicher ausgelesenen Wertepaaren von gemessener Drehzahl und zugeordnetem Maximalwert ermittelt wird.

Ferner betrifft die Erfindung ein Bremssystem für Kraftfahrzeuge mit einer elektrisch steuerbaren Druckbereitstellungseinrichtung, welche eine Zylinder-Kolben-Anordnung mit einem hydraulischen Druckraum und einem durch einen elektromechanischen Aktuator verschiebbaren Kolben umfasst, mit einer Anzahl hydraulischer Radbremsen, welche mindestens einer Achse des Fahrzeugs zugeordnet sind und über den hydraulischen Druckraum mit Bremsdruck versorgt werden können, und mit einem Sensor zur Erfassung des Fahrerbremswunschs, wobei der elektromechanische Aktuator ein Rotations-Translations-Getriebe und eine elektronisch kommutierten Synchronmaschine aufweist, welche einen Stator mit mindestens zwei, insbesondere drei, Phasenwicklungen, einen mindestens einen Permanentmagnet aufweisenden Rotor sowie mindestens einen Rotorlagesensor umfasst, welche ein derartiges elektronisches Steuergerät umfasst.

Zweckmäßigerweise umfasst das Bremssystem einen mit mindestens einem Rad des Kraftfahrzeugs verbundenen elektrischen Antrieb, der zumindest zeitweise derart angesteuert wird, dass dieser eine Bremsverzögerung des Fahrzeugs erzeugt und vorzugsweise zur Energierückgewinnung genutzt werden kann.

Weitere bevorzugte Ausführungsformen ergeben sich aus den Unteransprüchen und der nachfolgenden Beschreibung eines Ausführungsbeispiels an Hand von Figuren.

Es zeigen

Fig. 1 eine schematische Darstellung eines Ansteuerverfahrens bzw. einer Ansteuerschaltung gemäß eines ersten Ausführungsbeispiels der Erfindung,

Fig. 2 eine schematische Darstellung eines Ansteuerverfahrens bzw. einer Ansteuerschaltung gemäß eines zweiten Ausführungsbeispiels der Erfindung,

Fig. 3 eine schematische Darstellung eines Ansteuerverfahrens bzw. einer Ansteuerschaltung gemäß eines dritten Ausführungsbeispiels der Erfindung, und

Fig. 4 den prinzipiellen Aufbau einer Anordnung zum Betrieb einer permanenterregten Synchronmaschine.

Hinsichtlich des hydraulischen Aufbaus des Bremssystems wird auf die DE 10 2010 040 097 A1 verwiesen.

Die erfindungsgemäße Ansteuerung eignet sich besonders zur Ansteuerung von permanenterregten Synchronmaschinen mit beschränkter Induktivität, welche in einem breiten Drehzahlbereich mit einer hohen abgegebenen Leistung betrieben werden sollen. Im Folgenden wird die Ansteuerung von bürstenlosen Motoren mit gleichen Induktivitäten in Richtung der d- und q-Achse beschrieben; prinzipiell sind aber auch Motoren mit einem Reluktanzmoment nach einem erfindungsgemäßen Verfahren ansteuerbar.

Gemäß einer besonders bevorzugten Ausführungsform der Erfindung wird der eingeprägte magnetfeldschwächende Strom id nicht von einem Regler eingestellt, sondern so vorgegeben, dass bei einer ermittelten Drehzahl das maximal mögliche Motormoment abgegeben werden kann. Diese Art der Ansteuerung macht sich den Umstand zu Nutze, dass verschiedene angetriebene Aktuatoren, insbesondere in Bremssystemen, überwiegend an Spannungs- und Stromgrenze des Antriebs operieren. Wenn sich der Aktuator im Zielbereich des überlagerten Systems befindet, also z.B. nahezu an der Sollposition, so ist die angeforderte Drehzahl gering und die Arbeitspunkte des Antriebs liegen an der Stromgrenze, so dass dort kein magnetfeldschwächender Strom erforderlich ist. Fordert das überlagerte System eine geänderte Rotorposition an (nicht zwingend aufgrund einer Lageregelung), so soll diese häufig in der kürzesten möglichen Zeit angefahren werden, wodurch die durchlaufenen Arbeitspunkte an der Spannungsgrenze liegen.

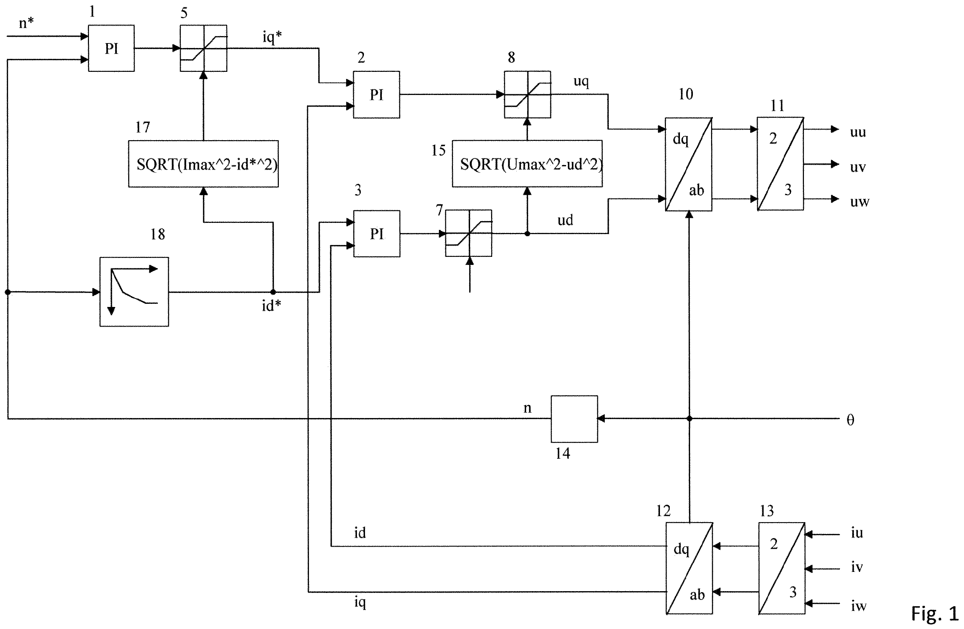

Das in Figur 1 schematisch gezeigte Ansteuerverfahren gemäß eines ersten Ausführungsbeispiels der Erfindung sieht daher vor, dass Sollwerte id* für den magnetfeldschwächenden Strom nach Maßgabe der gemessenen Drehzahl vorgegeben werden. Dies kann zweckmäßigerweise durch Auswertung eines Kennfeldes erfolgen, welches den Verlauf des optimalen magnetfeldschwächenden Stroms, bei dem die maximale Leistung und/oder das maximale Drehmoment abgegeben wird, über der Drehzahl beschreibt. Die Bestimmung des Kennfeldes kann auf Basis von Simulationen und Berechnungen anhand der Motorparameter erfolgen. Alternativ oder ergänzend kann das Kennfeld auch versuchstechnisch bestimmt werden, indem bei verschiedenen festen Drehzahlen bei angefordertem maximalen Phasenstrom der Anteil des magnetfeldschwächenden Stroms schrittweise erhöht wird, bis das maximal abgegebene Motormoment erreicht wird. Besonders vorteilhaft ist es, wenn ein Kennfeld zunächst berechnet und dann durch Messungen bestätigt wird.

Von einem Steuergerät des Gesamtsystems wird eine Solldrehzahl n* vorgegeben, welche in Drehzahlregler 1 mit einer gemessenen Motor- bzw. Rotordrehzahl n verglichen wird, um eine Stellgröße zu generieren, die dem angeforderten drehmomentbildenden Strom iq* entspricht. Der Drehzahlregler kann insbesondere als PI-Regler realisiert sein, also einen Proportional- und einen Integralanteil aufweisen.

Die nachgeschaltete iq-Strombegrenzung 5 begrenzt den Stromsollwert iq* so, dass abhängig vom aktuellen Sollwert id* für den magnetfeldschwächenden Strom der Betrag des Gesamtstromzeigers $i_{gesamt}$ einen vorgegebenen Maximalwert nicht überschreitet, wobei dieser Betrag nach folgender Beziehung berechnet werden kann:

$$i_{gesamt} = \sqrt{iq^2 + id^2}$$

Der jeweilige Maximalwert $iq_{max}$ für den drehmomentbildenden Strom wird von Modul 17 ermittelt, beispielsweise anhand der Beziehung:

$$iq_{max} = \sqrt{i_{max}^2 - i_{d*}^2}$$

Zusätzlich kann eine weitere Begrenzung des Stromsollwertes iq* derart erfolgen, dass das maximal zulässige Motormoment nicht überschritten wird:

$$iq_{max} = \frac{M_{max}}{k_T}$$

Alternativ kann es auch vorgesehen sein, den Maximalwert $iq_{max}$ für den drehmomentbildenden Strom durch Auslesen eines Kennfelds nach Maßgabe der Drehzahl zu ermitteln.

Dies ist besonders deshalb vorteilhaft, weil in Modul 18 der Sollwert id* für den magnetfeldschwächenden Strom in diesem Ausführungsbeispiel aus einem Kennfeld nach Maßgabe der Drehzahl ermittelt wird und somit für die Durchführung des Verfahrens nur eine geringe Rechenleistung erforderlich ist.

Das Bordnetz eines Kraftfahrzeugs kann je nach Fahrzustand und Ladestand der Batterie wechselnde Versorgungsspannungen aufweisen. Soll der angesteuerte Motor unabhängig von der momentanen Versorgungsspannung ein gleichbleibendes Verhalten zeigen, so ist es vorteilhaft, die Kennlinie für eine vorgegebene Referenzspannung, insbesondere einen minimalen zulässigen Wert für die Versorgungsspannung, vorzugeben und bei der Ermittlung eines Sollwerts id* für den magnetfeldschwächenden Strom eine Skalierung gemäß des Verhältnisses aus Referenzspannung und momentaner bzw. gemessener Versorgungsspannung vorzunehmen.

Werden sowohl Sollwert id* für den magnetfeldschwächenden Strom als auch Maximalwert $iq_{max}$ für den drehmomentbildenden Strom anhand eines Kennfelds nach Maßgabe der Drehzahl ermittelt, so kann die Charakteristik des Motors je nach vorgesehener Anwendung angepasst werden, indem geeignete Kennfelder vorgegeben werden.

Stellt eine Applikation die Anforderung, dass im motorischen Betrieb ein bestimmter Eingangsgleichstrom nicht überschritten wird, können die Werte von id* und $iq_{max}$ nach Maßgabe der Drehzahl derart vorgegeben werden, dass das abgegebene Motormoment bei Einhaltung der Grenze für den Eingangsgleichstrom maximal ist.

Stellt eine Applikation die Anforderung, dass im generatorischen Betrieb ein bestimmter Rückspeisestrom nicht überschritten wird, können die Werte von id* und $iq_{max}$ nach Maßgabe der Drehzahl derart vorgegeben werden, dass das abgegebene Motorbremsmoment bei Einhaltung der Grenze für den Rückspeisestrom maximal ist.

Stellt eine Applikation die Anforderung, dass der aufgenommene maximale Eingangsgleichstrom bei Versorgungsspannungen unterhalb des Nennspannungsbereichs bzw. der Referenzspannung verringert wird, so kann dies derart gelöst werden, dass der Maximalwert $iq_{max}$ abhängig von der gemessenen bzw. verfügbaren Versorgungsspannung reduziert wird.

Je nach Applikation können ergänzend auch Magnettemperatur und Wicklungstemperatur bei der Ermittlung der Werte von id* und $iq_{max}$ berücksichtigt werden.

Der ermittelte Sollwert id* wird Stromregler 3 zugeführt, welche anhand des Vergleichs von id* mit dem gemessenen magnetfeldschwächenden Strom id eine gewünschte magnetfeldschwächende Spannung ud in Richtung der d-Achse ermittelt. Es ist vorteilhaft, wenn Stromregler 2 als PI-Regler realisiert ist, also einen Proportional- und einen Integralanteil aufweist.

Die gewünschte magnetfeldschwächende Spannung du darf maximal der verfügbaren Spannung Umax im Zwischenkreis bzw. der Versorgungsspannung entsprechen und wird daher in Begrenzer 7 auf einen entsprechenden Wert limitiert.

Der Stromregler 2 für den drehmomentbildenden Strom vergleicht den Stromsollwert iq* mit einem aktuell gemessenen drehmomentbildenden Strom iq und generiert eine Stellgröße, die der gewünschten Spannung uq in Richtung der q-Achse entspricht. Zweckmäßigerweise kann Stromregler 2 als PI-Regler realisiert sein, also einen Proportional- und einen Integralanteil aufweisen.

Die gewünschte drehmomentbildende Spannung wird einem Begrenzer 8 zugeführt, welcher verhindert, dass der Betrag ugesamt des Gesamtspannungszeigers aus drehmomentbildender Spannung und magnetfeldschwächender Spannung die maximal verfügbare Spannung Umax überschreitet:

$$u_{gesamt} = \sqrt{uq^2 + ud^2}$$

Der Maximalwert $uq_{max}$ für die drehmomentbildende Spannung wird in Modul 15 zweckmäßigerweise anhand folgender Beziehung ermittelt:

$$uq_{max} = \sqrt{U_{max}^2 - u_d^2}$$

Alternativ kann es auch vorgesehen, den Maximalwert für Begrenzer 8 aus einem Kennfeld auszulesen.

Die gewünschten Werte für die drehmomentbildende Spannung uq und für die magnetfeldschwächende Spannung ud, also der Spannungszeiger im rotorfesten Koordinatensystem wird in Modul 10 anhand der gemessenen Rotorposition in das statorfeste Koordinatensystem transformiert und in Modul 11 in einen Spannungszeiger umgewandelt, welcher die an die einzelnen Phasenwicklungen anzulegenden Spannungen uu, uv, uw angibt. Dies kann mit einer geeigneten Transformation erfolgen, wie der inverse Clarke- und Park-Transformation; Verfahren für eine derartige Koordinatentransformation sind an sich bekannt.

Die Phasenwicklungen des Stators werden mittels einer aus Leistungshalbleitern bestehenden Brückenschaltung bestromt, wobei zweckmäßigerweise eine Pulsweitenmodulation stattfindet. Die Halbleiterschalter können beispielsweise als Sense-FETs ausgebildet sein, um eine Messung des durch die Phasenwicklungen fließenden Stroms zu ermöglichen. Alternativ ist auch die direkte Messung über einen Shunt oder einen induktiven Stromsensor möglich. Die erhalten Ströme iu, iv, iw werden in Modul 13 in das statorfeste Koordinatensystem umgerechnet und in Modul 12 anhand der gemessenen Rotorposition in das rotorfeste Koordinatensystem transformiert (bzw. alternativ in einem Schritt transformiert).

Zur Messung der Rotorposition dient zweckmäßigerweise ein Resolver, aus dessen Signalen ein (elektrischer) Rotorwinkel 0 bestimmt werden kann. Dieser wird Modul 14 zugeführt, welches (insbesondere aus einer Änderung der Signale) eine Motor- bzw. Rotordrehzahl ermittelt.

Dadurch, dass ein Sollwert für den magnetfeldschwächenden Strom anhand einer Kennlinie ermittelt wird, weist die Ansteuerung gemäß dieser Ausführung der Erfindung eine ganz besonders einfache Struktur auf.

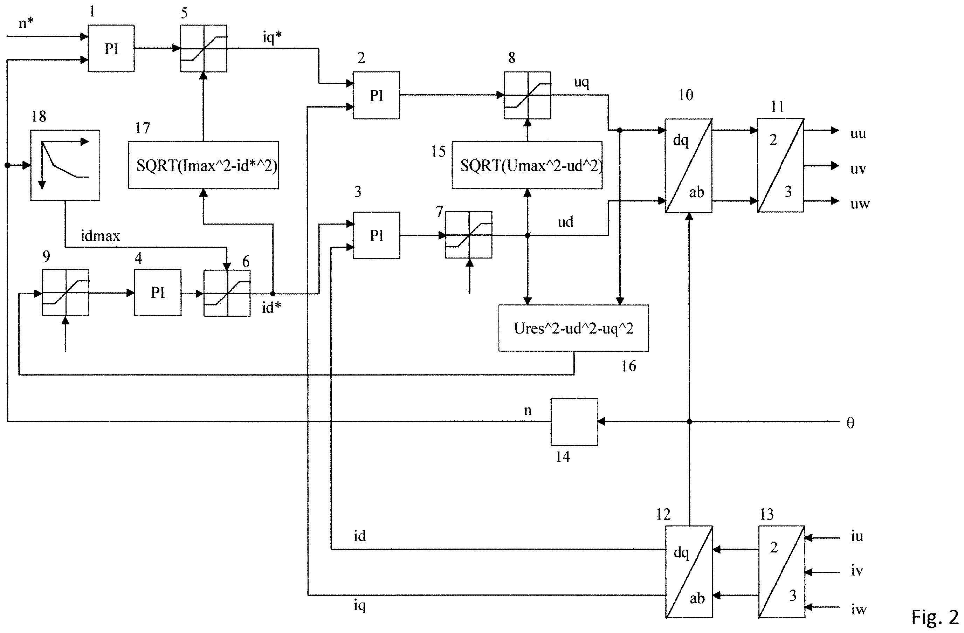

Gemäß eines alternativen Ausführungsbeispiels der Erfindung, welches in Figur 2 dargestellt ist, wird auch der magnetfeldschwächende Strom geregelt, wobei der Sollwert id* für den magnetfeldschwächenden Strom nach Maßgabe der gemessenen Drehzahl begrenzt wird. Module, welche in dieser Ausführungsform eine identische Funktion wie im ersten Ausführungsbeispiel bereitstellen, werden mit demselben Bezugszeichen versehen und für eine detaillierte Beschreibung wird auf die obigen Ausführungen verwiesen.

Drehzahlregler 1 vergleicht Solldrehzahl n* und aktuelle Rotordrehzahl n und generiert als Stellgröße einen Sollwert iq* für den drehmomentbildenden Strom. Der nachgeschaltete Begrenzer 5 begrenzt Stromsollwert iq* so, dass abhängig vom aktuellen Stromsollwert id* der zulässige Betrag des Gesamtstromzeigers nicht

überschritten wird. Hierfür wird in Modul 17 durch Berechnen oder Auslesen eines Kennfelds ein Maximalwert $iq_{max}$ ermittelt und dem Begrenzer vorgegeben. Stromregler 2 vergleicht Stromsollwert iq* und den aktuell vorliegenden drehmomentbildenden Strom iq und gibt eine gewünschte Spannung uq an, welche im nachgeschalteten Begrenzer 8 anhand der Versorgungsspannung und der gewünschten magnetfeldbildenden Spannung du begrenzt wird. Hierbei wird in Modul 15 der Maximalwert so vorgegeben, dass der Betrag des Spannungszeigers die verfügbare Versorgungsspannung nicht überschreitet.

Der im rotorfesten Koordinatensystem ermittelten Spannungszeiger aus drehmomentbildender Spannung und magnetfeldschwächender Spannung wird in den Modulen 10 und 11 (oder einem zusammengefassten Modul) einer geeigneten Transformation, wie einer inversen Clarke- und Park-Transformation, unterzogen, um den Spannungszeiger aus den an die einzelnen Phasenwicklungen anzulegenden Spannungen zu erhalten.

Weiterhin werden die drehmomentbildende Spannung uq und die magnetfeldschwächende Spannung ud einem Modul 16 zur Spannungsüberwachung zugeführt, welches den Abstand des Spannungszeigers zu einer Grenzspannung Ures ermittelt, bzw. den quadrierten Spannungszeiger von dem Quadrat der Grenzspannung subtrahiert (ggfs. anschließend die Quadratwurzel bildet). Die Grenzspannung ist zweckmäßigerweise um eine vorgegebene Spannungsdifferenz kleiner als die verfügbare Spannung Umax, so dass eine Spannungsreserve zum Einprägen neuer Stromsollwerte vorgehalten wird.

$$\Delta = Ures^2 - ud^2 - uq^2$$

Die ermittelte Differenz ∆ kann in Begrenzer 9 auf in einem vorgegebenen Intervall liegende Werte eingeschränkt werden, bevor sie als Regeldifferenz einem Feldschwächregler 4 zugeführt wird. Dieser kann zweckmäßigerweise als I- oder PI-Regler ausgeführt sein, d.h. Integral- und ggfs. Proportionalterme aufweisen. Der Feldschwächregler erzeugt anhand der Regeldifferenz einen Sollwert id* für den magnetfeldschwächenden Strom als Stellgröße.

Diese wird in Begrenzer 6 in negativer Richtung auf einen vorgegebenen Maximalwert $id_{max}$ begrenzt. Die Ermittlung dieses Maximalwerts für id* erfolgt in Modul 18 anhand eines Kennfelds nach Maßgabe der Drehzahl. Anders als in dem ersten Ausführungsbeispiel wird also nicht ein Sollwert, sondern nur ein Maximalwert idmax anhand eines Kennfelds ermittelt. Das vorgegebene Kennfeld kann anhand von Simulationen berechnet und/oder in Versuchen gemessen bzw. verifiziert werden. In Begrenzer 6 wird weiterhin der Sollwert id* in positiver Richtung auf null begrenzt. Somit ist sichergestellt, dass der in Richtung der d-Achse angelegte Strom magnetfeldschwächend wirkt.

Der ggfs. begrenzte Sollwert id* wird in Stromregler 3 mit dem gemessenen magnetfeldschwächenden Strom verglichen, wobei als Stellgröße ein Sollwert ud für die Spannung in Richtung der d-Achse generiert wird. Die weiteren Module, wie Begrenzer 7, Modul 14 zur Ermittlung der Drehzahl und die Module 12 und 13 für die Clarke- und Park-Transformation der gemessenen Ströme durch die Phasenwicklungen funktionieren wie bereits beschrieben.

Gemäß einer bevorzugten Ausführungsform der Erfindung wird der magnetfeldschwächende Strom derart begrenzt, dass auch ein minimaler Strom in negativer d-Achsen-Richtung vorgegeben wird und auf den Ausgang des Feldschwächreglers 4 aufgeschaltet wird. Dieser minimale Strom kann zweckmäßigerweise ebenfalls anhand eines Kennfelds nach Maßgabe der Drehzahl ermittelt werden.

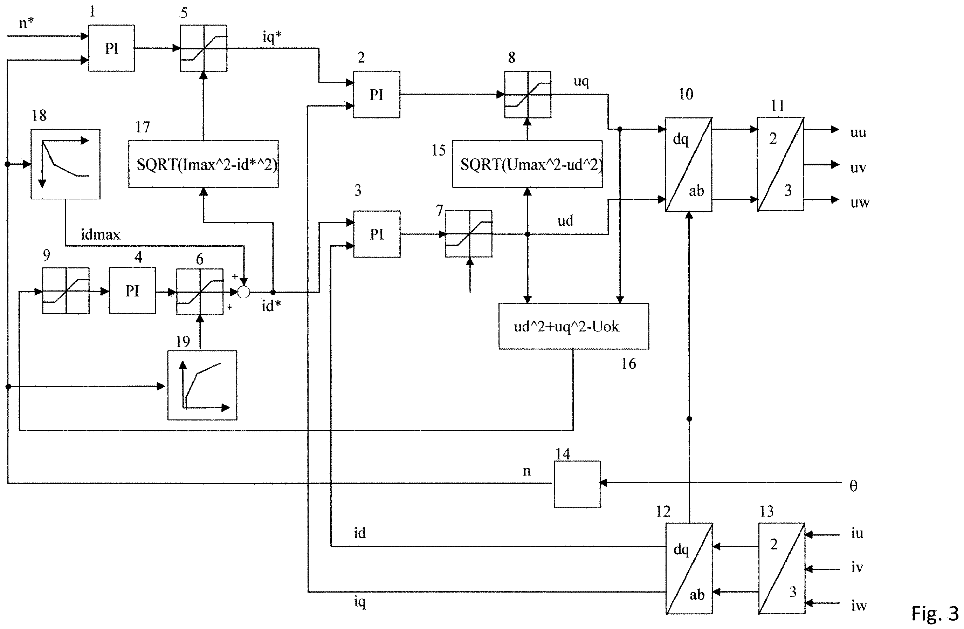

Figur 3 zeigt ein derartiges Ausführungsbeispiel des erfindungsgemäßen Verfahrens, welches auf der Ausführung gemäß Figur 2 aufbaut. Module, welche in dieser Ausführungsform eine identische Funktion wie im ersten Ausführungsbeispiel bereitstellen, werden mit demselben Bezugszeichen versehen und für eine detaillierte Beschreibung wird auf die obigen Ausführungen verwiesen.

Um die erreichbare Systemdynamik weiter zu erhöhen, wird zweckmäßigerweise der maximal zulässige feldschwächende Strom idmax als Vorsteuergröße auf den Reglerausgang des Feldschwächreglers 4 aufgeschaltet, welcher den magnetfeldschwächenden Strom auf den benötigten Wert reduziert. Es ist vorteilhaft, wenn die Vorsteuergröße nach einer vorgegebenen Zeit kontinuierlich auf null reduziert wird. Somit kann beim Betrieb des Motors im Feldschwächbereich, also bei hohen Drehzahlen mit reduziertem Drehmoment, verhindert werden, dass für lange Zeit ein unnötig großer magnetfeldschwächender Strom eingeprägt wird und unnötige Stromwärmeverluste auftreten.

Der Ausgang dieses Reglers kann drehzahlabhängig derart begrenzt werden, dass er nie kleiner als Null und nie größer als die Differenz zwischen maximal zulässigem magnetfeldschwächendem Strom id und bei einer Drehzahl mindestens notwendigen magnetfeldschwächenden Strom id wird. Zu diesem Zweck kann Modul 19 anhand eines Kennfelds nach Maßgabe der Drehzahl ermittelte Werte an Begrenzer 6 vorgegeben.

Im Falle einer dynamischen Sollwertanforderung bei eingeschwungenem Regler können Ausgangswert und I-Anteil des Reglers in geeigneter Weise manipuliert werden. Es kann vorgesehen sein, den I-Anteil des Reglers nach Maßgabe der Sollwertanforderung auf einen vorgegebenen Startwert zu setzen.

Durch geeignet angepasste Kennfelder ist somit ein besonders dynamischer Betrieb der elektronisch kommutierten Synchronmaschine gewährleistet, wobei Stellanforderungen also in minimaler Zeit umgesetzt werden. Besonders in Gefahrensituationen kann dabei ein schneller Bremsdruckaufbau sichergestellt werden.

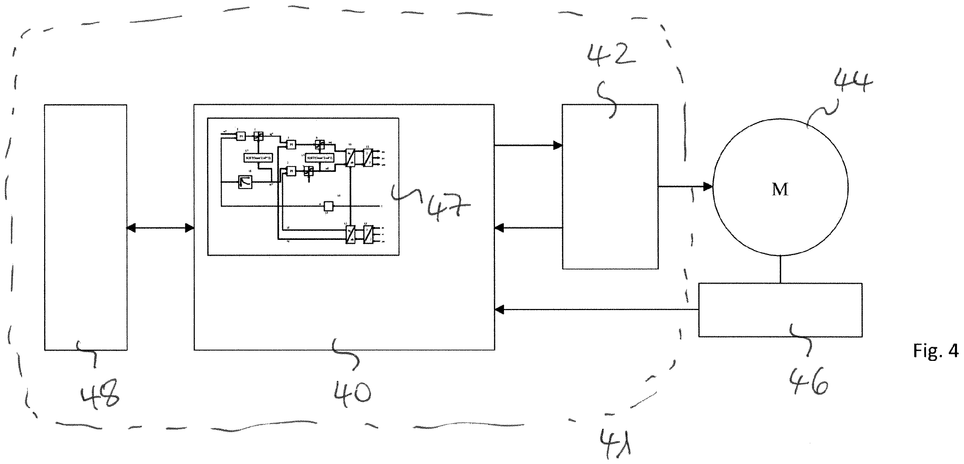

Figur 4 zeigt den schematischen Aufbau einer Anordnung zum Betrieb einer permanenterregten Synchronmaschine, welche ein erfindungsgemäßes Verfahren ausführen kann.

Ansteuerschaltung 41 umfasst eine Recheneinheit 40, einen Speicher 48 und eine Brückenschaltung bzw. Leistungsendstufe 42. Insbesondere kann die Recheneinheit 40 als Mikrocontroller ausgeführt sein, der einen integrierten Arbeitsspeicher und einen nichtflüchtigen Programmspeicher 47 aufweist. Ein entsprechender Mikrocontroller kann auch Speicher 48 umfassen, der beispielsweise als Flash-Speicher ausgeführt sein kann. Es ist vorteilhaft, wenn der Mikrocontroller einen oder mehrere Analog-Digitalwandler aufweist, die mit Messeinrichtungen an Leistungsendstufe oder Rotor verbunden sind. Die Leistungsendstufe kann z.B. Sense-FETs umfassen, um eine Strommessung zu ermöglichen. Auch ist es zweckmäßig, wenn Mittel zur Spannungsmessung vorgesehen sind. Prinzipiell können externe Sensoren auch über einen Datenbus angebunden sein. Die permanenterregte Synchronmaschine 44 weist einen Stator mit Phasenwicklungen, die von der Leistungsendstufe 42 bestromt werden, und einen Rotor auf, welcher mit der nicht gezeigten Last mechanisch verbunden ist. Die Position des Rotors wird von einem Sensor 46 ermittelt, der beispielsweise als Resolver oder optischer Drehencorder ausgeführt ist. Ferner ist es zweckmäßig, wenn Sensoren zur Messung der Temperatur von Phasenwicklungen, Magneten oder allgemein der Umgebung vorgesehen sind. Prinzipiell kann das erfindungsgemäße Verfahren auch von einer kundenspezifischen Schaltung ausgeführt werden, welche speziell angepasste Bauteile aufweist und insbesondere auf einem Halbleitersubstrat integriert ist.

## Patentansprüche

1. Verfahren zum Betreiben eines Bremssystems für Kraftfahrzeuge mit einer elektrisch steuerbaren Druckbereitstellungseinrichtung, welche eine Zylinder-Kolben-Anordnung mit einem hydraulischen Druckraum und einem durch einen elektromechanischen Aktuator verschiebbaren Kolben umfasst, mit einer Anzahl hydraulischer Radbremsen, welche mindestens einer Achse des Fahrzeugs zugeordnet sind und über den hydraulischen Druckraum mit Bremsdruck versorgt werden können, und mit einem Sensor zur Erfassung des Fahrerbremswunschs, wobei der elektromechanische Aktuator ein Rotations-Translations-Getriebe und eine elektrische Maschine aufweist,

   **dadurch gekennzeichnet, dass** die elektrische Maschine als elektronisch kommutierte Synchronmaschine ausgeführt ist, welche einen Stator mit mindestens zwei, insbesondere drei, Phasenwicklungen, einen mindestens einen Permanentmagnet aufweisenden Rotor sowie mindestens einen Rotorlagesensor umfasst, wobei

   - ein drehmomentbildender Strom (iq) und ein magnetfeldschwächender Strom (id) in einem rotorfesten Koordinatensystem geregelt werden, wobei als Stellgrößen Spannungen in dem rotorfesten Koordinatensystem ermittelt werden, welche anhand der gemessenen Rotorlage in einen Spannungszeiger transformiert werden, der für jede Phasenwicklung des Stators eine anzulegende Spannung angibt und

- ein Sollwert für den magnetfeldschwächenden Strom (id) nach Maßgabe der gemessenen Drehzahl des Rotors auf einen Maximalwert begrenzt wird, welcher aus einem vorgegebenen Kennfeld ermittelt wird, wobei
- der Sollwert für den magnetfeldschwächenden Strom auf einen nach Maßgabe der gemessenen Drehzahl vorgegebenen Minimalwert begrenzt wird,
- ein Sollwert für den magnetfeldschwächenden Strom nach Maßgabe der gemessenen Drehzahl des Rotors aus einem ersten vorgegebenen Kennfeld ermittelt wird und wobei
- der Sollwert für den magnetfeldschwächenden Strom anhand des Verhältnisses zwischen einer Referenzspannung und einer momentanen Versorgungsspannung angepasst oder skaliert wird.

2. Verfahren nach Anspruch 1, **dadurch gekennzeichnet, dass** ein Sollwert für den drehmomentbildenden Strom nach Maßgabe der gemessenen Drehzahl des Rotors auf einen Maximalwert des drehmomentbildenden Stroms begrenzt wird.

3. Verfahren nach Anspruch 2, **gekennzeichnet durch** die Verfahrensschritte: Berechnen eines Gesamtstroms aus magnetfeldschwächendem Strom und drehmomentbildendem Strom, Vorgeben des Sollwertes für den magnetfeldschwächenden Strom und Vorgeben des Maximalwertes des drehmomentbildenden Stroms, so dass der berechnete Gesamtstrom einen vorgegebenen Grenzwert nicht überschreitet und dass das Drehmoment der elektronisch kommutierten Synchronmaschine unter Einhaltung des Grenzwerts für den Gesamtstrom maximal wird.

4. Verfahren nach Anspruch 1, **dadurch gekennzeichnet, dass** die Begrenzung erfolgt, nachdem der Sollwert für den magnetfeldschwächenden Strom (id) nach Maßgabe einer Differenz zwischen dem Betrag einer vorgegebenen Maximalspannung, welche insbesondere einer momentanen Versorgungsspannung abzüglich eines vorgegebenen Spannungsintervalls entspricht, und dem Betrag eines aus drehmomentbildender Spannung und magnetfeldschwächender Spannung gebildeten Spannungszeigers ermittelt wurde, wobei insbesondere eine Regelung dieser Differenz erfolgt.

5. Verfahren nach Anspruch 4, **dadurch gekennzeichnet, dass** eine Regelung der Differenz zwischen dem Betrag einer vorgegebenen Maximalspannung und dem Betrag eines aus drehmomentbildender Spannung und magnetfeldschwächender Spannung gebildeten Spannungszeigers dann stattfindet, wenn der Betrag des Spannungszeigers einen vorgegebenen Minimalwert unterschreitet, wobei eine Vorsteuerung des Sollwerts für den magnetfeldschwächenden Strom erfolgt, insbesondere indem der maximal zulässige feldschwächende Strom vorgegeben wird.

6. Verfahren nach einem der vorhergehenden Ansprüche, **dadurch gekennzeichnet, dass** ein Sollwert für den drehmomentbildenden Strom (iq) nach Maßgabe einer Abweichung zwischen einer Solldrehzahl und der gemessenen Drehzahl des Rotors ermittelt wird, wobei der Sollwert für den drehmomentbildenden Strom nach Maßgabe eines Sollwerts für den magnetfeldschwächenden Strom und/oder eines maximal zulässigen Gesamtstroms und/oder eines maximal zulässigen Motormoments auf einen Maximalwert begrenzt wird.

7. Verfahren nach einem der vorhergehenden Ansprüche, **dadurch gekennzeichnet, dass** eine drehmomentbildende Spannung in dem rotorfesten Koordinatensystem nach Maßgabe der Differenz zwischen einem Sollwert für den drehmomentbildenden Strom und einem gemessenen drehmomentbildenden Strom ermittelt wird, wobei die drehmomentbildende Spannung vorzugsweise nach Maßgabe einer Differenz zwischen dem Betrag einer vorgegebenen Maximalspannung, insbesondere einer Versorgungsspannung, und dem Betrag einer magnetfeldschwächenden Spannung begrenzt wird.

8. Verfahren nach einem der vorhergehenden Ansprüche, **dadurch gekennzeichnet, dass** eine magnetfeldschwächende Spannung in dem rotorfesten Koordinatensystem nach Maßgabe der Differenz zwischen einem Sollwert für den magnetfeldschwächenden Strom und einem gemessenen magnetfeldschwächenden Strom ermittelt wird.

9. Verfahren nach einem der vorhergehenden Ansprüche, **dadurch gekennzeichnet, dass** ein gemessener drehmomentbildender Strom und ein gemessener magnetfeldschwächender Strom in einem rotorfesten Koordinatensystem anhand der gemessenen Rotorlage aus gemessenen Strömen durch die Phasenwicklungen des Rotors ermittelt werden.

10. Verfahren nach mindestens einem der vorhergehenden Ansprüche, **dadurch gekennzeichnet, dass** der Sollwert für den magnetfeldschwächenden Strom weiterhin anhand einer gemessenen Rotortemperatur und/oder gemessenen Statortemperatur und/oder einer momentanen Versorgungsspannung begrenzt oder angepasst wird.

**11.** Verfahren nach mindestens einem der vorhergehenden Ansprüche, **dadurch gekennzeichnet, dass** die Phasenwicklungen des Stators über jeweils eine Pulsweitenmodulationsschaltung mit Strom versorgt werden, wobei eine an eine Phasenwicklung des Stators anzulegende Spannung in einen Aussteuerungsgrad der entsprechenden Pulsweitenmodulationsschaltung umgerechnet wird.

**12.** Verfahren nach Anspruch 11, **dadurch gekennzeichnet, dass** der Aussteuerungsgrad gemäß einem Verhältnis aus einer Referenzspannung und einer momentanen Versorgungsspannung, insbesondere einer gemessenen Zwischenkreisspannung der Pulsweitenmodulationsschaltung, angepasst oder skaliert wird.

**13.** Elektronisches Steuergerät für ein Bremssystem, umfassend eine Ansteuerschaltung für eine elektronisch kommutierte Synchronmaschine, mit einer Recheneinheit und in mindestens einer Brückenschaltung angeordneten Halbleiterschaltelementen, insbesondere jeweils einer Phase des Stators zugeordnete Pulsweitenmodulationsschaltungen, **dadurch gekennzeichnet, dass** die Recheneinheit ein Verfahren nach mindestens einem der vorhergehenden Ansprüche durchführt, wobei der Maximalwert für den magnetfeldschwächenden Strom anhand von aus einem nichtflüchtigen Speicher ausgelesenen Wertepaaren von gemessener Drehzahl und zugeordnetem Maximalwert ermittelt wird.

**14.** Bremssystem für Kraftfahrzeuge mit einer elektrisch steuerbaren Druckbereitstellungseinrichtung, welche eine Zylinder-Kolben-Anordnung mit einem hydraulischen Druckraum und einem durch einen elektromechanischen Aktuator verschiebbaren Kolben umfasst, mit einer Anzahl hydraulischer Radbremsen, welche mindestens einer Achse des Fahrzeugs zugeordnet sind und über den hydraulischen Druckraum mit Bremsdruck versorgt werden können, und mit einem Sensor zur Erfassung des Fahrerbremswunschs, wobei der elektromechanische Aktuator ein Rotations-Translations-Getriebe und eine elektronisch kommutierten Synchronmaschine aufweist, welche einen Stator mit mindestens zwei, insbesondere drei, Phasenwicklungen, einen mindestens einen Permanentmagnet aufweisenden Rotor sowie mindestens einen Rotorlagesensor umfasst, **gekennzeichnet durch** ein elektronisches Steuergerät gemäß Anspruch 13.

**15.** Bremssystem nach Anspruch 14, **gekennzeichnet durch** einen mit mindestens einem Rad des Kraftfahrzeugs verbundenen elektrischen Antrieb, der zumindest zeitweise derart angesteuert wird, dass dieser eine Bremsverzögerung des Fahrzeugs erzeugt und vorzugsweise zur Energierückgewinnung genutzt werden kann.

**Claims**

**1.** Method for operating a brake system for motor vehicles with an electrically controllable pressure supply device comprising a cylinder-piston arrangement with a hydraulic pressure chamber and a piston displaceable by an electromechanical actuator, with a number of hydraulic wheel brakes, which are associated with at least one axle of the vehicle and which can be supplied with brake pressure by means of the hydraulic pressure chamber, and with a sensor for detecting the driver's braking intention, wherein the electromechanical actuator has a rotation-translation gearbox and an electric machine,

**characterized in that** the electric machine is implemented as an electronically commutated synchronous machine comprising a stator with at least two, in particular three, phase windings, a rotor having at least one permanent magnet, and at least one rotor position sensor, wherein

- a torque-forming current ($i_q$) and a magnetic field attenuation current ($i_d$) are regulated in a coordinate system that is fixed relative to the rotor, wherein voltages in the coordinate system that is fixed relative to the rotor are determined as control variables and are transformed using the measured rotor position into a voltage vector that gives a voltage to be applied for each phase winding of the stator, and
- a target value for the magnetic field attenuation current ($i_d$) is limited to a maximum value, according to the measured speed of the rotor, which is determined from a predetermined characteristic field, wherein
- the target value for the magnetic field attenuation current is limited to a minimum value that is predetermined according to the measured speed,
- a target value for the magnetic field attenuation current is determined according to the measured speed of the rotor from a first predetermined characteristic field, and wherein
- the target value for the magnetic field attenuation current is adapted or scaled using the ratio between a reference voltage and a present supply voltage.

**2.** Method according to Claim 1, **characterized in that** a target value for the torque-forming current is limited to a maximum value of the torque-forming current according to the measured speed of the rotor.

**3.** Method according to Claim 2, **characterized by** the method steps: calculating a total current of the magnetic field attenuation current and the torque-forming current, predetermining the target value for the magnetic field attenuation current and predetermining the maximum value of the torque-forming current so that the calculated total current does not exceed a predetermined limit value and that the torque of the electronically commutated synchronous machine is at a maximum while complying with the limit value for the total current.

4. Method according to Claim 1, **characterized in that** the limiting is carried out after the target value for the magnetic field attenuation current (id) has been determined according to a difference between the magnitude of a predetermined maximum voltage, which in particular corresponds to a present supply voltage minus a predetermined voltage interval, and the magnitude of a voltage vector formed from the torque-forming voltage and the magnetic field attenuation voltage, wherein in particular the regulation of said difference is carried out.

5. Method according to Claim 4, **characterized in that** a regulation of the difference between the magnitude of a predetermined maximum voltage and the magnitude of a voltage vector formed from the torque-forming voltage and the magnetic field attenuation voltage is carried out if the magnitude of the voltage vector is less than a predetermined minimum value, wherein pre-control of the target value for the magnetic field attenuation current is carried out, in particular by predetermining the maximum permissible field attenuation current.

6. Method according to one of the preceding claims, **characterized in that** a target value for the torque-forming current (iq) is determined according to a deviation between a target speed and the measured speed of the rotor, wherein the target value for the torque-forming current is limited to a maximum value according to a target value for the magnetic field attenuation current and/or a maximum permissible total current and/or a maximum permissible motor torque.

7. Method according to one of the preceding claims, **characterized in that** a torque-forming voltage in the coordinate system that is fixed relative to the rotor is determined according to the difference between a target value for the torque-forming current and a measured torque-forming current, wherein the torque-forming voltage is preferably limited according to a difference between the magnitude of a predetermined maximum voltage, in particular a supply voltage, and the magnitude of a magnetic field attenuation voltage.

8. Method according to one of the preceding claims, **characterized in that** a magnetic field attenuation voltage in the coordinate system that is fixed relative to the rotor is determined according to the difference between a target value for the magnetic field attenuation current and a measured magnetic field attenuation current.

9. Method according to one of the preceding claims, **characterized in that** a measured torque-forming current and a measured magnetic field attenuation current in a coordinate system that is fixed relative to the rotor are determined from measured currents through the phase windings of the rotor using the measured rotor position.

10. Method according to at least one of the preceding claims, **characterized in that** the target value for the magnetic field attenuation current is furthermore limited or adapted using a measured rotor temperature and/or a measured stator temperature and/or a present supply voltage.

11. Method according to at least one of the preceding claims, **characterized in that** the phase windings of the stator are supplied with current in each case by means of a pulse width modulation circuit, wherein a voltage to be applied to a phase winding of the stator is converted into a degree of actuation of the corresponding pulse width modulation circuit.

12. Method according to Claim 11, **characterized in that** the degree of actuation is adapted or scaled according to a ratio of a reference voltage and a present supply voltage, in particular a measured intermediate circuit voltage of the pulse width modulation circuit.

13. Electronic control unit for a brake system, comprising an actuation circuit for an electronically commutated synchronous machine, with a computing unit and semiconductor switching elements arranged in at least one bridge circuit, in particular pulse width modulation circuits associated with a respective phase of the stator, **characterized in that** the computing unit carries out a method according to at least one of the preceding claims, wherein the maximum value for the magnetic field attenuation current is determined using pairs of values of measured speed and associated maximum value read out from a non-volatile memory.

14. Brake system for motor vehicles with an electrically controllable pressure supply device comprising a cylinder-piston arrangement with a hydraulic pressure chamber and a piston displaceable by an electromechanical actuator, with a number of hydraulic wheel brakes, which are associated with at least one axle of the vehicle and which can be supplied with brake pressure by means of the hydraulic pressure chamber, and with a sensor for detecting the driver's braking intention, wherein the electromechanical actuator has a rotation-translation gearbox and an electronically commutated synchronous machine comprising a stator with at least two, in particular three, phase windings, a rotor having at least one permanent magnet, and at least one rotor position sensor, **characterized by** an electronic control unit according to Claim 13.

15. Brake system according to Claim 14, **characterized by** an electric drive, which is connected to at least one wheel of the motor vehicle and is actuated at least at times so that said drive produces a braking deceleration of the vehicle and can preferably be used for energy recovery.

## Revendications

1. Procédé permettant de faire fonctionner un système de freinage pour véhicules automobiles, comprenant un dispositif générateur de pression à commande électrique qui comprend un ensemble cylindre/piston pourvu d'une chambre de pression hydraulique et d'un piston pouvant être déplacé par un actionneur électromécanique, un certain nombre de freins de roue hydrauliques qui sont associés à au moins un essieu du véhicule et peuvent être alimentés en pression de freinage par l'intermédiaire de la chambre de pression hydraulique, et un capteur pour détecter le souhait de freinage du conducteur, dans lequel l'actionneur électromécanique présente un mécanisme de rotation-translation et une machine électrique,

   **caractérisé en ce que** la machine électrique est réalisée comme une machine synchrone à commutation électronique qui comprend un stator pourvu d'au moins deux, en particulier de trois, enroulements de phase, un rotor présentant au moins un aimant permanent, ainsi qu'au moins un capteur de position de rotor, dans lequel

   - un courant générateur de couple (iq) et un courant atténuateur de champ magnétique (id) sont régulés dans un système de coordonnées solidaire du rotor, dans lequel des tensions dans le système de coordonnées solidaire du rotor sont établies comme grandeurs de réglage, qui sont transformées à l'aide de la position de rotor mesurée en un vecteur de tension qui indique une tension à appliquer pour chaque enroulement de phase du stator, et
   - une valeur de consigne pour le courant atténuateur de champ magnétique (id) est limitée conformément à la vitesse de rotation mesurée du rotor à une valeur maximale qui est établie à partir d'un diagramme caractéristique prédéfini, dans lequel
   - la valeur de consigne pour le courant atténuateur de champ magnétique est limitée à une valeur minimale prédéfinie conformément à la vitesse de rotation mesurée,
   - une valeur de consigne pour le courant atténuateur de champ magnétique est établie conformément à la vitesse de rotation mesurée du rotor à partir d'un premier diagramme caractéristique prédéfini, et dans lequel
   - la valeur de consigne pour le courant atténuateur de champ magnétique est adaptée ou mise à l'échelle à l'aide du rapport entre une tension de référence et une tension d'alimentation instantanée.

2. Procédé selon la revendication 1, **caractérisé en ce qu'**une valeur de consigne pour le courant générateur de couple est limitée conformément à la vitesse de rotation mesurée du rotor à une valeur maximale du courant générateur de couple.

3. Procédé selon la revendication 2, **caractérisé par** les étapes de procédé consistant à : calculer un courant total composé du courant atténuateur de champ magnétique et du courant générateur de couple, spécifier la valeur de consigne pour le courant atténuateur de champ magnétique et spécifier la valeur maximale pour le courant générateur de couple de sorte que le courant total calculé ne dépasse pas une valeur limite prédéfinie et que le couple de la machine synchrone à commutation électrique passe au maximum tout en respectant la valeur limite du courant total maximal.

4. Procédé selon la revendication 1, **caractérisé en ce que** la limitation est effectuée après que la valeur de consigne pour le courant atténuateur de champ magnétique (id) a été établie conformément à une différence entre la grandeur d'une tension maximale prédéfinie qui correspond en particulier à une tension d'alimentation instantanée moins un intervalle de tension prédéfini et la grandeur d'un vecteur de tension formé à partir de la tension génératrice de couple et de la tension atténuatrice de champ magnétique, dans lequel en particulier une régulation de cette différence est effectuée.

5. Procédé selon la revendication 4, **caractérisé en ce qu'**une régulation de la différence entre la grandeur d'une tension maximale prédéfinie et la grandeur d'un vecteur de tension formé à partir de la tension génératrice de couple et de la tension atténuatrice de champ magnétique a lieu lorsque la grandeur du vecteur de tension est inférieure à une valeur minimale prédéfinie, dans lequel une commande pilote de la valeur de consigne pour le courant atténuateur de champ magnétique est effectuée, en particulier par la prédéfinition du courant atténuateur de champ admissible au maximum.

6.  Procédé selon l'une quelconque des revendications précédentes, **caractérisé en ce qu'**une valeur de consigne pour le courant générateur de couple (iq) est établie conformément à un écart entre une vitesse de rotation de consigne et la vitesse de rotation mesurée du rotor, dans lequel la valeur de consigne pour le courant générateur de couple est limitée à une valeur maximale conformément à une valeur de consigne pour le courant atténuateur de champ magnétique et/ou un courant total admissible au maximum et/ou un couple moteur admissible au maximum.

7.  Procédé selon l'une quelconque des revendications précédentes, **caractérisé en ce qu'**une tension génératrice de couple dans le système de coordonnées solidaire du rotor est établie conformément à une différence entre une valeur de consigne pour le courant générateur de couple et un courant générateur de couple mesuré, dans lequel la tension génératrice de couple est limitée de préférence conformément à une différence entre la grandeur d'une tension maximale prédéfinie, en particulier d'une tension d'alimentation, et la grandeur d'une tension atténuatrice de champ magnétique.

8.  Procédé selon l'une quelconque des revendications précédentes, **caractérisé en ce qu'**une tension atténuatrice de champ magnétique dans le système de coordonnées solidaire du rotor est établie conformément à la différence entre une valeur de consigne pour le courant atténuateur de champ magnétique et un courant atténuateur de champ magnétique mesuré.

9.  Procédé selon l'une quelconque des revendications précédentes, **caractérisé en ce qu'**un courant générateur de couple mesuré et un courant atténuateur de champ magnétique mesuré sont établis dans un système de coordonnées solidaire du rotor à l'aide de la position de rotor mesurée à partir de courants mesurés par les enroulements de phase du rotor.

10.  Procédé selon au moins l'une des revendications précédentes, **caractérisé en ce que** la valeur de consigne pour le courant atténuateur de champ magnétique est en outre limité ou adapté à l'aide d'une température de rotor mesurée et/ou d'une température de stator mesurée et/ou d'une tension d'alimentation instantanée.

11.  Procédé selon au moins l'une des revendications précédentes, **caractérisé en ce que** les enroulements de phase du stator sont alimentés en courant par respectivement un circuit de modulation d'impulsions en largeur, dans lequel une tension à appliquer à un enroulement de phase du stator est convertie en un facteur de réglage du circuit de modulation d'impulsions en largeur correspondant.

12.  Procédé selon la revendication 11, **caractérisé en ce que** le facteur de réglage est adapté ou mis à l'échelle selon un rapport entre une tension de référence et une tension d'alimentation instantanée, en particulier d'une tension de circuit intermédiaire mesurée du circuit de modulation d'impulsions en largeur.

13.  Appareil de commande électronique pour un système de freinage, comprenant un circuit d'attaque pour une machine synchrone à commutation électronique, pourvu d'une unité de calcul et d'éléments de circuit à semiconducteur montés en pont, en particulier de circuits de modulation d'impulsions en largeur associés respectivement à une phase du stator, **caractérisé en ce que** l'unité de calcul exécute un procédé selon au moins l'une des revendications précédentes, dans lequel la valeur maximale pour le courant atténuateur de champ magnétique est établie à l'aide de paires de valeurs lues dans une mémoire non volatile, composées d'une vitesse de rotation mesurée et d'une valeur maximale associée.

14.  Système de freinage pour véhicules automobiles, comprenant un dispositif générateur de pression à commande électrique comprenant un ensemble cylindre/piston pourvu d'une chambre de pression hydraulique et d'un piston pouvant être déplacé par un actionneur électromécanique, un certain nombre de freins de roue hydrauliques qui sont associés à au moins un essieu du véhicule et peuvent être alimentés en pression de freinage par la chambre de pression hydraulique, et un capteur pour détecter le souhait de freinage du conducteur, dans lequel l'actionneur électromécanique est un mécanisme de rotation/translation et présente une machine synchrone à commutation électronique qui comprend un stator pourvu d'au moins deux, en particulier de trois, enroulements de phase, un rotor présentant au moins un aimant permanent, ainsi qu'au moins un capteur de position de rotor,
**caractérisé en ce que** par un appareil de commande électronique selon la revendication 13.

15.  Système de freinage selon la revendication 14, **caractérisé par** un entraînement électrique relié à au moins une roue du véhicule automobile et qui est piloté au moins temporairement de façon à générer un retard de freinage du véhicule et peut être utilisé de préférence pour la récupération d'énergie.

Fig. 1

Fig. 2

Fig. 3

uu
uv
uw

θ
iu
iv
iw

11
2
3

13
2
3

10
dq
ab

12
dq
ab

16
ud^2+uq^2-Uok

uq

8

15 SQRT(Umax^2-ud^2)

ud

7

14

n

2 PI

3 PI

id

iq

iq*

5

17 SQRT(Imax^2-id*^2)

id*

6

19

1 PI

4 PI

18

idmax

9

n*

Fig. 4

EP 3 145 746 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1154922 B1
- DE 102010040097 A1
- DE 102007033145 A1
- US 20091284195 A1
- US 619486581 B